# EUROPÄISCHE PATENTSCHRIFT

(11) **EP 3 792 136 B1**
(45) Veröffentlichungstag und Bekanntmachung des Hinweises auf die Patenterteilung: **26.07.2023**
(21) Anmeldenummer: 19214224.8
(22) Anmeldetag: 06.12.2019
(51) Int. Cl.: B61G 9/04

(54) **ANLENKUNGSEINRICHTUNG FÜR EINE KUPPLUNG, INSBESONDERE EINES SCHIENENFAHRZEUGS**
STEERING DEVICE FOR A COUPLING, ESPECIALLY FOR A RAIL VEHICLE
DISPOSITIF DE DIRECTION POUR UN ACCOUPLEMENT, EN PARTICULIER D'UN VÉHICULE FERROVIAIRE

(30) Priorität: 12.09.2019 CH 11472019
(43) Veröffentlichungstag der Anmeldung: 17.03.2021
(73) Patentinhaber: Faiveley Transport Schwab AG, 8207 Schaffhausen (CH)
(72) Erfinder: PLECKO, Marijan, 8200 Neuhausen (CH); FAAS, Stefan, 9050 Appenzell (CH)
(74) Vertreter: Luchs, Willi

(56) Entgegenhaltungen:
- EP-A1- 1 785 329
- DE-U- 6 902 444
- DE-U1- 20 009 859
- US-A1- 2012 199 545

## Beschreibung

Die Erfindung betrifft eine Anlenkungseinrichtung für eine Kupplung, insbesondere eines Schienenfahrzeugs, nach dem Oberbegriff des Anspruchs 1.

Eine Anlenkungseinrichtung dieser Gattung ist in der EP 3 385 143 geoffenbart. Sie eignet sich insbesondere für Eisenbahnwagen, bei denen eine optimale Dämpfung der beim Kupplungsvorgang auftretenden Zug-und Druckkräfte angestrebt wird. Bei Güterwagen genügen einfachere Konstruktionen und es kommen entsprechend Ausführungen der Einrichtung in Betracht, die bei Zusammenstössen derzeitig keine irreversiblen Energieabsorptionselemente, wie zum Beispiel Aufweitrohre oder ähnlichem, aufweisen müssen. Für ein gutes Funktionieren der Kupplung ist zu berücksichtigen, dass der an der Zugstange montierte Kupplungskopf möglichst in einer senkrecht vom Güterwagen wegragenden Stellung gehalten wird.

Bei der Druckschrift DE 200 09 859 U1 ist eine Vorrichtung zur elastischen Lagerung des Kupplungsarmes einer Mittelpufferkupplung an einem Schienenfahrzeug offenbart. Es ist ein als Zugstange vorgesehener Kupplungsarm und eine diesen haltende Zentralplatte vorgesehen, welche an einem Träger gehalten sind. Der Kupplungsarm ist durch elastische Elemente gegen Zug- und gegen Druckbelastung abgestützt. Es ist dabei eine horizontale Abstützung zur ergänzenden Lagerung des Kupplungsarmes vorgesehen, die einen rückseitig bei der Zentralplatte gelenkig gelagerten Gelenkhebel mit Justiermitteln und eine von diesem vorderseitig gestützte Feder aufweist, wobei die Feder senkrecht zum Kupplungsarm angeordnet ist.

Eine Energieabsorber-Kupplung gemäss der Druckschrift US 2012/0199545 weist optional einen vertikalen Supportmechanismus auf, welcher ein ein- oder mehrere Federn enthaltendes Tragelement umfasst, das vertikal einen zweiten Kupplungsverbinder einer Deformationsrohrs von unten hält. Dieses Tragelement kann mittels einer entsprechenden Befestigung schwenkbar an einem zweiten Tragelement gelagert sein.

Es sind bei der horizontalen Abstützung und bei diesem vertikalen Supportmechanismus jeweils diese Federn senkrecht zum Kupplungsarm bzw. zum Kupplungsverbinder angeordnet.

Der Erfindung liegt die Aufgabe zugrunde, eine Anlenkungseinrichtung der eingangs genannten Art zu schaffen, die bei einfacher und kostengünstiger Konstruktion derart ausgebildet ist, dass dieser an der Zugstange montierte Kupplungskopf oder ähnlichem im entkuppelten Zustand in eine möglichst zentrische Ausgangslage zurückkehrt.

Diese Aufgabe ist erfindungsgemäss nach den Merkmalen des Anspruchs 1 gelöst.

Auf diese Weise wird zum Einen erreicht, dass der Verbindungsarm die Zugstange mit dem Kupplungskopf oder ähnlichem in der gewünschten Höhenlage sicher hält, und zum Andern, dass er nach dem Entkuppeln die Zugstange mit dem Kupplungskopf oder ähnlichem selbsttätig in die zentrische Ausgangslage zurückbringt, indem die Zugstange bei Auslenkbewegungen durch die Druckkraft des Verbindungsarmes automatisch wieder in die zentrische Lage zurückgeführt wird. Zudem wird mit diesem Verbindungsarm eine Verdrehsicherung der Zugstange bewirkt.

Erfindungsgemäss ist im Sinne einer konstruktiv einfachen Bauweise vorgesehen, dass der Verbindungsarm eine Führungsstange und eine diese umgebende Druckfeder aufweist. Diese Führungsstange ist dabei an dem einen Ende an der Zugstange befestigt und am anderen Ende in der Abstützung axial verschiebbar und schwenkbar gelagert.

Erfindungsgemäss ist dabei vorgesehen, dass die Druckfeder einerseits an der Abstützung und andererseits bei einer Halterung der Zugstange für die Erzeugung dieser stützenden Druckkraft angreift.

Diese erfindungsgemässe Anlenkungseinrichtung ermöglicht eine kostengünstige und einfache Bauweise, die zudem betriebssicher ist und eine Einstellbarkeit der Höhenposition der Zugstange ermöglicht.

Um die Gelenkigkeit der Anlenkungseinrichtung sicherzustellen, sieht die Erfindung vor, dass die Abstützung mit einer sphärisch integrierten flexiblen Gummibüchse für die Führungsstange des Verbindungsarms versehen ist.

Die Erfindung ist nachfolgend anhand von Ausführungsbeispielen unter Bezugnahme auf die Zeichnung näher erläutert. Es zeigen:
- Fig. 1: einen Längsschnitt einer erfindungsgemässen Anlenkungseinrichtung;
- Fig. 2: eine Frontansicht der Anlenkungseinrichtung mit der Abstützung nach Fig. 1; und
- Fig. 3: eine perspektivische Ansicht der Anlenkungseinrichtung nach Fig. 1 von der Rückseite her betrachtet.

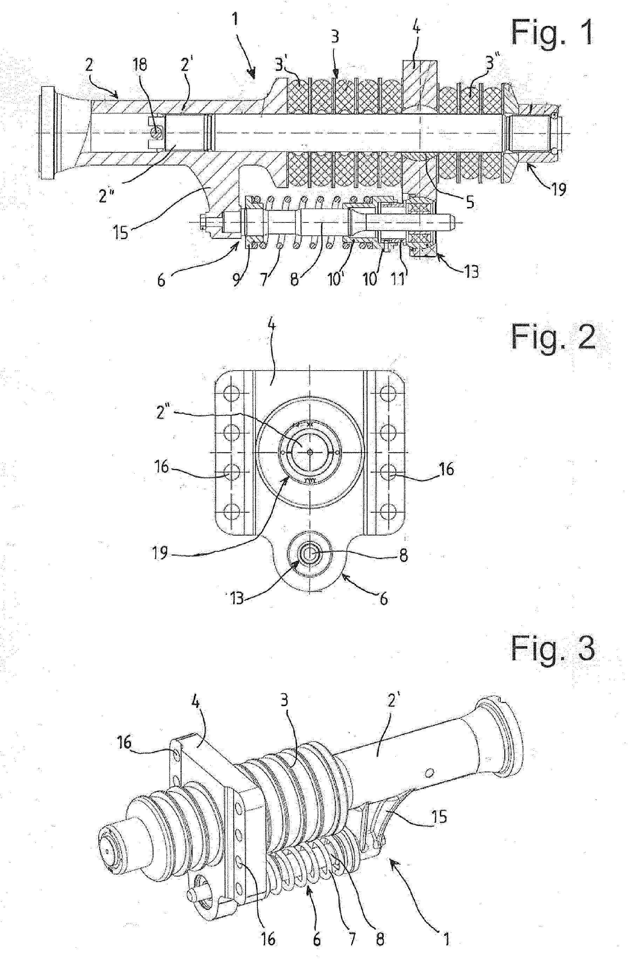

Die in Fig. 1 gezeigte Anlenkungseinrichtung 1 einer Zug- und Stossvorrichtung dient zum Ausrichten eines Kupplungskopfes, eines Kopfelementes oder ähnlichem eines Schienenfahrzeugs, die sich insbesondere für Güterwagen eignet, bei denen geringere Anforderungen an die Sicherheit bei einem Aufprallen oder Crashs von Zügen bestehen als dies bei Personenwagen oder einzelner Wagen der Fall ist.

Die Anlenkungseinrichtung 1 besteht aus einer mit dem Kupplungskopf oder dergleichen verbindbaren Zugstange 2, mehreren aneinandergereihten Federelementen 3 zum Dämpfen der entstehenden Druck- bzw. Zugkräfte sowie aus einer am Schienenfahrzeug befestigbaren Abstützung 4. Es sind dabei vor und hinter der Abstützung 4 je eine bestimmte Anzahl solcher Federelemente 3 aneinandergereiht, zum Beispiel vorne fünf Federelemente 3' für den Druck bzw. hinten drei Federelemente 3" für den Zug, oder beliebig andere Anzahlen. Die Zugstange 2 ist für ein Auslenken in einer vorzugsweise annähernd horizontalen Ebene in Fahrtrichtung des Wagens in einem in der Abstützung 4 zwischen den Federelementen 3 angeordneten Drehgelenk 5 gelagert. Sie besteht dabei aus einer Halterung 2' und einem in dieser eingeschraubten Stangenelement 2", die durch einen Zylinderstift 18 gegen Verdrehen gesichert sind. Zudem ist beim hinteren Ende des Stangenelementes 2" ein Anschlagmittel 19 für die Federelemente 3 befestigt, welches vorzugsweise eine auf dem Stangenelement 2" aufschraubbare Mutter mit einem Sicherungselement und ein loser Druckteller aufweist, durch die ein Zusammendrücken der Federelemente 3 mit einer definierten Presskraft ermöglicht wird.

Zum Halten der Zugstange 2 in dieser Ebene und Rückführen derselben in eine relativ zum Fahrzeug zentrierte Ausgangslage ist erfindungsgemäss ein parallel zur Zugstange 2 ausgerichteter Verbindungsarm 6 vorgesehen, welcher eine Führungsstange 8 und eine diese koaxial umgebende Druckfeder 7 aufweist. Diese Führungsstange 8 ist an dem einen Ende an einem wegragenden Teil 15 der Halterung 2' bei der Zugstange 2 befestigt und am anderen Ende in der Abstützung 4 axial verschiebbar und schwenkbar gelagert.

Zweckmässigerweise ist die Druckfeder 7 an beiden Enden von je einer auf der Führungsstange 8 zentrierten Lagerbüchsen 9, 10 gehalten, wobei die eine Lagerbüchse 9 bei dem Teil 15 abgestützt ist. Die andere Lagerbüchse 10 ist als eine Führungshülse 10' für die Druckfeder 7 ausgebildet. Die Druckfeder 7 ist beidseitig derart abgestützt, dass sie einerseits via die Lagerbüchse 10 an der Abstützung 4 und andererseits bei diesem Teil 15 durch die Lagerbüchse 9 an der Führungsstange 8 und einem dazwischenliegenden Ring für die Erzeugung einer stützenden Druckkraft angreift.

Zudem ist diese Druckfeder 7 durch ein Justiermittel in Achsrichtung gegenüber der Abstützung 4 verstellbar, damit die Zugstange in ihrer Höhe ausgerichtet werden kann. Diesem Justiermittel ist vorzugsweise eine Gewindehülse 11 bei der Abstützung 4 zugeordnet, auf welcher die Lagerbüchse 10 und damit die Druckfeder 7 schraubbar verstellt werden kann. Dadurch wird die Zugstange 2 um ein Drehgelenk 5 bei der Abstützung 4 vorderseitig nach oben oder unten geschwenkt. Im Prinzip könnte dieses Justiermittel auch bei der Lagerbüchse 9 angeordnet bzw. anders ausgebildet sein.

Der erfindungsgemässe Verbindungsarm 6 als Federspeicher ermöglicht, dass einerseits die Zugstange 2 im ungekuppelten Zustand in einer annähernd waagerechte Ebene und andererseits die Rückführung der Zugstange 2 in eine relativ zum Fahrzeug zentrischen Ausgangslage, indem er sie mit dem Stützflansch 4 derart koppelt, dass eine Druckkraft der Druckfeder 7 ermöglicht wird und dadurch bei Auslenkungen der Zugstange eine Druckkraft auf die Zugstange 2 erzeugt wird, die sie und den damit verbundenen Kupplungskopf in die zentrierte Ausgangslage zurückbringt. Letzteres erfolgt selbsttätig, weil die Auslenkbewegung der Zugstange automatisch die auf sie wirkende Federkraft des Verbindungsarmes aktiviert.

In der Abstützung 4 ist ein sphärisch ausgebildetes Drehgelenk 5 für die Zugstange 2 sowie ein mehrteiliges kugeliges Lager 13 mit einer flexiblen Gummibüchse als Drehgelenk für die Führungsstange 8 des Verbindungsarms 6 eingebaut. Damit wird insbesondere im gekuppelten Zustand diese gegenüberliegend in dem Teil 15 der Halterung 2' befestigte Führungsstange 8 bei einem Auslenken der Zugstange 2 um den vom Drehgelenk 5 gebildeten Schwenkpunkt um den beim Lager 13 gebildeten Schwenkpunkt geschwenkt. Nach dem Entkuppeln bewirken einerseits die mit einer Vorspannung zusammengedrückten Federelemente 3 und massgeblich aber andererseits diese Druckfeder 7 der Anlenkeinrichtung 1, dass die Zugstange in Längsrichtung des Wagens sowohl horizontal als auch vertikal ausgerichtet wird und sich nicht leicht schräg nach unten neigt.

Gemäss Fig. 2 ist die Abstützung 4 plattenförmig ausgebildet und in diesem ist das Drehgelenk 5 für die Zugstange 2 sowie auf seiner Unterseite dieses Lager 13 für die Führungsstange 8 angeordnet. Die Abstützung 4 umfasst ausserdem beidseitig mehrere Bohrungen 16, vorzugsweise insgesamt 8 Bohrungen, für Befestigungsschrauben auf, mit denen diese Abstützung am Fahrzeug festschraubbar ist.

Gemäss Fig. 3 ist ersichtlich, dass die Halterung 2' der Zugstange 2 mit dem Teil 15 einteilig und somit kostengünstig herstellbar ist.

Der Verbindungsarm 6 ist parallel zur Zugstange 2 der Anlenkungseinrichtung angeordnet. Es ist aber auch im Rahmen der Erfindung möglich, den Verbindungsarm in einer davon abweichenden Ausrichtung anzuordnen, wenn auch hier bei Auslenkbewegungen der Zugstange der Verbindungsarm eine Druckkraft auf die Zugstange ausüben kann. Er könnte auch oberhalb oder seitlich bei der Zugstange angeordnet sein.

## Patentansprüche

1. Anlenkungseinrichtung für eine Kupplung insbesondere eines Schienenfahrzeugs, mit einer Zugstange (2), einer mit dem Schienenfahr-zeug verbindbaren Abstützung (4) sowie mehreren auf der Zugstange (2) angeordneten Federelementen (3) beidseitig der die Zugstange (2) lagern-den Abstützung (4) zum Dämpfen der beim Kuppeln entstehenden Druck- und Zugkräfte, wobei die Zugstange (2) zum Auslenken derselben in einem in der Abstützung (4) zwischen den Federelementen (3) angeordneten Drehgelenk (5) gelagert ist, wobei ein zwischen der Abstützung (4) und der Zugstange (2) vorzugsweise vorgesehener Verbindungsarm (6) angeordnet ist, der die Zugstange (2) mit der Abstützung (4) derart verbindet, dass eine stützende Druckkraft auf die Zugstange (2) erzeugt und damit zumindest eine bestimmte zentrierende Höhenposition derselben bewirkt wird, **dadurch gekennzeichnet, dass**
der parallel zu der Zugstange (2) ausgerichtete Verbindungsarm (6) eine Führungsstange (8) und eine diese umgebende Druckfeder (7) aufweist, wobei diese Führungsstange (8) an dem einen Ende an einer Halterung (2') der Zugstange (2) befestigt und am anderen Ende bei der Abstützung (4) axial verschiebbar und schwenkbar gelagert ist, und dass die Druckfeder (7) einerseits an der Abstützung (4) und andererseits bei einer Halterung (2') der Zugstange (2) für die Erzeugung dieser stützenden Druckkraft angreift.

2. Anlenkungseinrichtung nach Anspruch 1, **dadurch gekennzeichnet, dass**
der Verbindungsarm (6) an dem einen Ende an einem bei der Zugstange (2) wegragenden Teil (15) der Halterung (2') der Zugstange (2) befestigt ist.

3. Anlenkungseinrichtung nach Anspruch 2, **dadurch gekennzeichnet, dass**
die Druckfeder (7) beidseitig von auf der Führungsstange (8) zentrierten Lagerbüchsen (9, 10) gehalten ist und vorzugsweise zusätzlich bei einer Führungshülse (10') der Lagerbüchse (10) geführt ist.

4. Anlenkungseinrichtung nach einem der Ansprüche 1 bis 3, **dadurch gekennzeichnet, dass**
die Druckfeder (7) durch ein Justiermittel zum Einstellen der Höhenposition der Zugstange (2) in Achsrichtung verstellbar ist.

5. Anlenkungseinrichtung nach einem der Ansprüche 1 bis 4, **dadurch gekennzeichnet, dass**
die Abstützung (4) mit einem sphärisch ausgebildeten Drehgelenk (5) für die gelenkige Lagerung der Zugstange (2) sowie einem Lager (13) mit einer flexiblen Gummibüchse für die gelenkige Lagerung der Führungsstange (8) des Verbindungsarms (6) versehen ist.

6. Anlenkungseinrichtung nach einem der Ansprüche 2 bis 5, **dadurch gekennzeichnet, dass**
die Zugstange (2) aus einem Stangenelement (2") und einer mit diesem verbundenen Halterung (2') mit dem daran seitlich wegragenden Teil (15) zum Festhalten des Verbindungsarms (6) zusammengesetzt ist.

7. Anlenkungseinrichtung nach Anspruch 6, **dadurch gekennzeichnet, dass**
die Halterung (2') mit dem Teil (15) der Zugstange (2) einstückig gegossen ist.

8. Anlenkungseinrichtung nach einem der Ansprüche 1 bis 7, **dadurch gekennzeichnet, dass**
die Abstützung (4) plattenförmig ausgebildet ist und vor und hinter dieser jeweils fünf bzw. drei oder jeweils eine andere Anzahl scheibenförmige Federelemente (3) auf der Zugstange (2) aneinandergereiht sind.

9. Anlenkungseinrichtung nach einem der Ansprüche 1 bis 8, **dadurch gekennzeichnet, dass**
mit dem Verbindungsarm (6) eine Verdrehsicherung der Zugstange (2) ermöglicht ist.

10. Anlenkungseinrichtung nach einem der Ansprüche 1 bis 9, **dadurch gekennzeichnet, dass**
im entkuppelten Zustand einerseits die mit einer Vorspannung zusammengedrückten Federelemente (3) und andererseits diese Druckfeder (7) der Anlenkeinrichtung (1) bewirken, dass die Zugstange (2) in Längsrichtung des Schienenfahrzeugs selbsttätig zentrisch ausrichtbar ist.

## Claims

1. Steering device for a coupling, in particular of a rail vehicle, with a drawbar (2), a support element (4) which can be connected to the rail vehicle, and several spring elements (3) arranged on the drawbar (2), on both sides of the support element (4) mounted on the drawbar (2), in order to dampen the pressure and tensile forces incurred during coupling, wherein the drawbar (2), in order to allow for deflection, is mounted in a rotary link (5) arranged in the support element (4) between the spring elements (3), wherein a connecting arm (6) is arranged preferably between the support element (4) and the drawbar (2), which connects the drawbar (2) to the support element (4) in such a way that a supporting pressure force is exerted on the drawbar (2), and therefore has the effect of causing at least a certain centring height position, **characterized in that**
the connecting arm (6) aligned parallel to the drawbar (2) comprises a guide rod (8) and a pressure spring (7) surrounding this, wherein this guide rod (8) is secured at one end to a holding element (2') of the drawbar (2), and at the other end is mounted at the support element (4) such as to be capable of axially displacement and pivoting, and that the pressure springs (7) engage on the one hand in the support element (4), and on the other hand in a holding element (2') of the drawbar (2) in order to generate the pressure force for supporting it.

2. Steering device according to claim 1, **characterized in that** the connecting arm (6) is secured at one end to a part (15) of the holding element (2') of the drawbar (2) projecting away from the drawbar (2).

3. Steering device according to claim 2, **characterized in that** the pressure spring (7) is held on both sides by bearing bushings (9, 10) centred on the guide rod (8), and preferably is additionally guided by a guide bushing (10') of the bearing bushings (10).

4. Steering device according to any one of claims 1 to 3, **characterized in that** the pressure spring (7) is adjustable by means of an adjustment means for adjusting the height position of the drawbar (2) in the axial direction.

5. Steering device according to any one of claims 1 to 4, **characterized in that** the support element (4) is provided with a spherically configured rotary joint (5) for the jointed mounting of the drawbar (2), and a bearing (13) with a flexible rubber bushing for the jointed mounting of the guide rod (8) of the connecting arm (6).

6. Steering device according to any one of claims 2 to 5, **characterized in that** the drawbar (2) is composed of a bar element (2") and a holding element (2') connected to it, with the part (15) projecting away laterally in order to secure the connecting arm (6).

7. Steering device according to claim 6, **characterized in that** the holding element (2') is cast as one piece with the part (15) of the drawbar (2).

8. Steering device according to any one of claims 1 to 7, **characterized in that** the support element (4) is configured in the form of a plate, and arranged in rows before and behind it are in each case five or three or another number of disk-shaped spring elements (3) on the drawbar (2).

9. Steering device according to any one of claims 1 to 8, **characterized in that** by means of the connecting arm (6) it is possible to secure the drawbar (2) against rotation.

10. Steering device according to any one of claims 1 to 9, **characterized in that** in the uncoupled state, on the one hand the spring elements (3), compressed under a preliminary tension, and, on the other hand, this pressure spring (7) of the steering device (1), have the effect of the drawbar (2) can be automatically aligned centrically in the longitudinal direction of the rail vehicle.

## Revendications

1. Dispositif d'articulation pour un accouplement, en particulier d'un véhicule ferroviaire, comprenant un tirant (2), un appui (4), qui peut être relié au véhicule ferroviaire, ainsi que plusieurs éléments (3) de ressort montés sur le tirant (2) des deux côtés de l'appui (4), logeant le tirant (2), pour l'amortissement des forces de poussée et de traction se créant à l'accouplement, dans lequel le tirant (2) est, pour la déviation du même, monté dans une articulation (5) pivotante disposée dans l'appui (4) entre les éléments (3) de ressorts, dans lequel il est disposé un bras (6) de liaison, qui est prévu, de préférence, entre l'appui (4) et le tirant (2) et qui relie le tirant (2) à l'appui (4), de manière à produire une force de poussée d'appui sur le tirant (2) et à provoquer ainsi au moins une position en hauteur déterminée de centrage du même, **caractérisé en ce que**
le bras (6), dirigé parallèlement au tirant (2), a une barre (8) de guidage et un ressort (7) de compression entourant celle-ci, dans lequel cette barre (8) de guidage est fixée à une extrémité à une fixation (2') du tirant (2) et à l'autre extrémité est montée coulissante axialement et pivotante à l'appui (4), et **en ce que** le ressort (7) de compression attaque d'une part l'appui (4) et d'autre part une fixation (2') du tirant (2) pour la production de cette force de poussée d'appui.

2. Dispositif d'articulation suivant la revendication 1, **caractérisé en ce que**
le bras (6) de liaison est fixé à une extrémité à une partie (15) faisant saillie, en s'éloignant du tirant (2), de la fixation (2') du tirant (2).

3. Dispositif d'articulation suivant la revendication 2, **caractérisé en ce que**
le ressort (7) de compression est maintenu des deux côtés par des coussinets (9, 10) centrés sur la barre (8) de guidage et est guidé, de préférence, supplémentairement dans une douille (10') de guidage du coussinet (10).

4. Dispositif d'articulation suivant l'une des revendications 1 à 3, **caractérisé en ce que**
le ressort (7) de compression est réglable dans la direction axiale par un moyen d'ajustement pour le réglage de la position en hauteur du tirant (2).

5. Dispositif d'articulation suivant l'une des revendications 1 à 4, **caractérisé en ce que**
l'appui (4) est pourvu d'une articulation (5) pivotante de constitution sphérique pour le montage à pivotement du tirant (2) ainsi que d'un palier (13) ayant un coussinet souple en caoutchouc pour le montage à pivotement de la barre (8) de guidage du bras (6) de liaison.

6. Dispositif d'articulation suivant l'une des revendications 2 à 5, **caractérisé en ce que**
le tirant (2) est composé d'un élément (2'') de barre et d'une fixation (2') reliée à celui-ci et ayant la partie (15) faisant saillie en s'en éloignant latéralement pour la fixation du bras (6) de liaison.

7. Dispositif d'articulation suivant la revendication 6, **caractérisé en ce que**
la fixation (2') est coulée d'une seule pièce avec la partie (15) du tirant (2).

8. Dispositif d'articulation suivant l'une des revendications 1 à 7, **caractérisé en ce que**
l'appui (4) est constitué en forme de plaque et, devant et derrière celui-ci, respectivement cinq ou trois ou respectivement un autre nombre d'éléments (3) de ressorts en forme de disque sont rangés sur le tirant (2).

9. Dispositif d'articulation suivant l'une des revendications 1 à 8, **caractérisé en ce qu'**
une sécurité à la torsion du tirant (2) est rendue possible par le bras (6) de liaison.

10. Dispositif d'articulation suivant l'une des revendications 1 à 9, **caractérisé en ce que**
dans l'état désaccouplé, d'une part les éléments (3) de ressort comprimés avec une précontrainte, et d'autre part ce ressort (7) de compression du dispositif (1) d'articulation font que le tirant (2) peut être orienté de manière centrée automatiquement dans la direction longitudinale du véhicule ferroviaire.
